# EUROPÄISCHE PATENTSCHRIFT

(11) **EP 3 593 965 B1**
(45) Veröffentlichungstag und Bekanntmachung des Hinweises auf die Patenterteilung: **17.01.2024**
(21) Anmeldenummer: 19181038.1
(22) Anmeldetag: 18.06.2019
(51) Int. Cl.: B26D 7/06

(54) **VORRICHTUNG ZUM AUFSCHNEIDEN VON LEBENSMITTELPRODUKTEN**
DEVICE FOR SLICING FOOD PRODUCTS
DISPOSITIF DE DÉCOUPAGE EN TRANCHES DE PRODUITS ALIMENTAIRES

(30) Priorität: 06.07.2018 DE 102018116448
(43) Veröffentlichungstag der Anmeldung: 15.01.2020
(73) Patentinhaber: Textor Maschinenbau GmbH, 87787 Wolfertschwenden (DE)
(72) Erfinder: Schmeiser, Jörg, 87487 Wiggensbach (DE)
(74) Vertreter: Manitz Finsterwald Patent- und Rechtsanwaltspartnerschaft mbB

(56) Entgegenhaltungen:
- DE-A1- 10 146 155
- DE-A1-102014 104 660
- GB-A- 2 446 567
- US-A- 3 162 226

## Beschreibung

Die Erfindung betrifft gemäß dem Oberbegriff des Anspruchs 1 eine Vorrichtung zum, insbesondere mehrspurigen, Aufschneiden von Lebensmittelprodukten, insbesondere Hochgeschwindigkeitsslicer, mit einer Produktzufuhr, die dazu ausgebildet ist, aufzuschneidende Produkte in einer Transportrichtung einem Schneidbereich zuzuführen, in welchem sich ein Schneidmesser rotierend und/oder umlaufend bewegt, wobei die Produktzufuhr wenigstens eine, insbesondere zumindest einen Teil einer Beladeschwinge bildende, Produktauflage, durch die eine Auflagefläche für die Produkte definiert ist, und zumindest einen oberhalb der Auflagefläche angeordneten, sich in Transportrichtung erstreckenden Seitenanschlag für wenigstens ein zuzuführendes Produkt umfasst, und wobei eine Basis vorgesehen ist.

Die Erfindung betrifft außerdem gemäß dem unabhängigen Anspruch 11 ein Verfahren zum Aufschneiden von Lebensmittelprodukten, bei dem wenigstens ein Produkt vor dem Aufschneiden mittels eines Seitenanschlags in Querrichtung positioniert wird.

Derartige Vorrichtungen und Verfahren zum Aufschneiden von Lebensmittelprodukten, die auch als Hochleistungsslicer bezeichnet werden und dazu dienen, Produkte wie beispielsweise Wurst, Schinken und Käse mit hoher Geschwindigkeit, d.h. mit Schneidgeschwindigkeiten von mehreren 100 bis einigen 1.000 Schnitten pro Minute, in Scheiben zu schneiden, sind grundsätzlich bekannt. Die Produktzufuhr sorgt dafür, dass entweder ein Produkt oder gleichzeitig mehrere nebeneinander liegende Produkte dem rotierenden Kreismesser oder Sichelmesser zugeführt werden. Hierbei liegen die Produkte auf einer Produktauflage auf, die typischerweise eine vergleichsweise glatte, ebene Auflagefläche umfasst, welche beispielsweise von einem Edelstahlblech oder einem Kunststoffstreifen gebildet wird. Alternativ kann die Produktauflage von einem oder mehreren Förderbändern gebildet werden. Häufig umfasst die Produktzufuhr einen meist als Greifer ausgebildeten Produkthalter, der mit einem hinteren Produktbereich zusammenwirkt, um das Produkt aktiv dem Schneidbereich zuzuführen oder zumindest stabilisierend zu halten, wenn der Vorschub des Produkts durch andere Mittel, wie insbesondere Förder- oder Traktionsbänder, erfolgt

Häufig ist die Produktauflage als eine sogenannte Beladeschwinge ausgebildet oder bildet die Produktauflage einen Teil einer derartigen Beladeschwinge. Hierbei kann die Produktauflage zwischen einer geneigten Arbeits- bzw. Schneideposition und einer meist zumindest näherungsweise horizontalen Beladeposition verstellt werden, in der das oder die als nächstes aufzuschneidenden Produkte auf die Produktauflage aufgebracht werden, die anschließend in die obere Arbeitsposition verschwenkt wird.

Derartige Slicer sind immer häufiger für einen Mehrspurbetrieb ausgelegt. Auf der Produktauflage liegen dann mehrere aufzuschneidende Produkte nebeneinander. Für jede Spur und somit jedes Produkt kann dann ein eigener Produkthalter vorgesehen sein. Auch die Produktauflage selbst kann derart geteilt sein, dass für jedes Produkt eine eigene Einzel-Produktauflage vorhanden ist.

Sowohl für derartige Mehrspurslicer als auch für einspurige Aufschneidevorrichtungen ist es bekannt, für die aufzuschneidenden Produkte einen Seitenanschlag vorzusehen, dessen Position in Querrichtung einstellbar sein kann, der aber während des Schneidbetriebs einen festen Anschlag für das Produkt bildet. Hinsichtlich seiner Querposition ist ein solcher Seitenanschlag auf die Position des Schneidmessers abgestimmt, um auf diese Weise die Querposition des Produkts relativ zum Schneidmesser während des Aufschneidens festzulegen. Der Seitenanschlag sorgt folglich für eine jeweils gewünschte optimale Querposition des Produktes relativ zum Schneidmesser und insbesondere auch relativ zu der den messerseitigen Abschluss der Produktzufuhr bildenden, beim Aufschneiden mit dem Schneidmesser nach Art eines Gegenmessers zusammenwirkenden Schneidkante. Daher ist ein derartiger Seitenanschlag stets auf der in Drehrichtung des Schneidmessers vorne liegenden Seite des Produkts angeordnet, d.h. auf derjenigen Seite des Produkts, zu der das Produkt von dem rotierenden Schneidmesser gedrängt wird, wenn das Schneidmesser in das Produkt eindringt. Auf diese Weise ist eine sichere Abstützung des Produkts gegen die Schneidkräfte gewährleistet.

Wenn mehrere Produkte gleichzeitig aufgeschnitten werden, kann ein gemeinsamer Seitenanschlag für alle Produkte vorgesehen sein. Es ist aber auch bekannt, bei einem Mehrspurslicer für jede Spur einen eigenen Seitenanschlag vorzusehen. Des Weiteren ist es grundsätzlich bekannt, dem oder jedem festen Seitenanschlag einen weiteren Anschlag auf der anderen Seite des Produktes zuzuordnen. Ein solcher weiterer Seitenanschlag ist typischerweise beweglich ausgeführt, um das betreffende Produkt in Querrichtung zu zentrieren und gegebenenfalls auch vorübergehend klemmend festzuhalten, um insbesondere einen gegebenenfalls vorgesehenen Produkthalter zuverlässig mit dem hinteren Produktbereich in Eingriff zu bringen. Die Seitenanschläge, insbesondere die jeweils zusätzlich zu einem Festanschlag vorgesehenen beweglichen Anschläge, werden manchmal auch als Mittentrennstege bezeichnet. Die Bewegung der verstellbaren Seitenanschläge bzw. Mittentrennstege kann sowohl manuell als auch durch Stellantriebe erfolgen.

Nachteilig an den bekannten, insbesondere den verstellbaren, Ausgestaltungen der Seitenanschläge sind der relativ komplizierte Aufbau und die damit verbundenen Kosten. Zudem benötigt ein derartiges Seitenanschlagskonzept vergleichsweise viel Platz in Querrichtung, was zu einer relativ großen Breite der Produktzufuhr führt. Dies reduziert in nachteiliger Weise die insgesamt für die Produkte zur Verfügung stehende Schneidbreite der Produktzufuhr. Insbesondere dann, wenn die einzelnen Anschläge verstellbar ausgeführt sind, ergibt sich zudem durch die in die Produktauflage zu integrierenden Verstelleinrichtungen ein äußerst komplexer Gesamtaufbau. Besonders schwer wiegt dies bei einem Mehrspurslicer mit einer relativ großen Anzahl von Spuren und somit vergleichsweise vielen einzelnen Seitenanschlägen.

Ein Verzicht auf Seitenanschläge ist allerdings in der Praxis meist nicht möglich. Insbesondere beim Aufschneiden von toleranzbehafteter Kaliberware ist es wichtig, dass einerseits ein ausreichend großes Spiel zwischen einem jeweiligen festen Seitenanschlag und einem zugehörigen verstellbaren Seitenanschlag oder Mittentrennsteg vorhanden ist, damit die Produkte zuverlässig zugeführt und auf die Produktauflage aufgebracht werden können. Andererseits muss sichergestellt sein, dass die Produkte in den einzelnen Spuren am jeweils zugeordneten Seitenanschlag anliegen, bevor mit dem Aufschneideprozess begonnen wird. Ein nicht korrekt mittels eines Seitenanschlags positioniertes Produkt kann seitlich ausweichen, wenn das Schneidmesser in das Produkt eindringt. Das Produkt wird dann vom Schneidmesser gegen den Seitenanschlag gedrückt, was zu einer unerwünschten Schnipselbildung und/oder zu unregelmäßig geformten Produktscheiben führen kann.

Aus US 3 162 226 A sind eine Vorrichtung gemäß dem Oberbegriff des Anspruchs 1 und ein Verfahren gemäß dem Oberbegriff des Anspruchs 11 bekannt. Bei dieser Vorrichtung ist eine Produktauflage gemeinsam mit einem festen Seitenanschlag und mit einem federgelagerten Seitenanschlag in Querrichtung verstellbar, wobei aufgrund der federnden Lagerung des einen Seitenanschlags dieser grundsätzlich in Querrichtung relativ zu der Produktauflage bewegbar, eine solche Relativbewegung aber nicht im Zusammenhang mit einer Positionierung aufzuschneidender Produkte in Querrichtung offenbart ist.

Aufgabe der Erfindung ist es, bei einer Aufschneidevorrichtung bzw. einem Aufschneideverfahren der eingangs genannten Art die Produktzufuhr dahingehend zu verbessern, dass die aufzuschneidenden Produkte in Querrichtung zuverlässig in der jeweils gewünschten Weise positioniert werden können, ohne die übrigen Funktionen der Produktzufuhr zu beeinträchtigen. Dabei soll die Produktzufuhr möglichst einfach aufgebaut sein, möglichst wenig Platz in Querrichtung beanspruchen und ein möglichst großer Anteil der Schneidbreite für die aufzuschneidenden Produkte zur Verfügung stehen.

Die Lösung dieser Aufgabe erfolgt jeweils durch die Merkmale der unabhängigen Ansprüche 1 und 11.

Bei der erfindungsgemäßen Aufschneidevorrichtung ist vorgesehen, dass die Produktauflage in einer senkrecht zur Transportrichtung verlaufenden Querrichtung bei in Querrichtung relativ zur Basis feststehend angeordnetem Seitenanschlag relativ zu der Basis verstellbar ist.

Bei dem erfindungsgemäßen Verfahren ist vorgesehen, dass das Produkt, das auf der Produktauflage liegt, durch Verstellen der Produktauflage in Querrichtung gegen den Seitenanschlag bewegt wird.

Dabei wird vorzugsweise die Produktauflage in Querrichtung verschoben.

Die Erfindung bedeutet folglich eine Abkehr von dem bislang eingeschlagenen Weg, die jeweils gewünschten Produktpositionen durch verstellbare Seitenanschläge zu erreichen. Die Erfindung geht vielmehr den umgekehrten Weg, indem es die Produktauflage ist, die in Querrichtung verstellt wird. Diese Verstellfunktion kann mit einfachen Mitteln und bei geringem Platzbedarf in Querrichtung realisiert werden. Je nach konkreter Ausgestaltung kann es genügen, wenn in Querrichtung nur so viel Platz zur Verfügung steht, wie für den Verstellweg der Produktauflage benötigt wird. Besonders vorteilhaft ist die Erfindung bei einer mehrspurigen Produktzufuhr, da nicht eine Mehrzahl einzelner Seitenanschläge in Querrichtung bewegt zu werden braucht, sondern es genügt, lediglich die Produktauflage zu verstellen.

Durch die Erfindung ergibt sich folglich eine besonders einfache Handhabung von Produkten, und zwar insbesondere auch dann, wenn die Produkte in Form von sogenannter Kaliberware vorliegen, die mit Toleranzen behaftet ist.

Der Bauaufwand für die Seitenanschläge und gegebenenfalls vorgesehene Mittentrennstege kann durch die Erfindung minimiert werden. Insbesondere ist nur eine sehr geringe Breite der Seitenanschläge und Mittentrennstege erforderlich. Die insgesamt zur Verfügung stehende Schneidbreite kann folglich optimal für die aufzuschneidenden Produkte selbst genutzt werden, was wiederum zur Folge hat, dass die mit der jeweiligen Schneidbreite korrespondierende Größe des Schneidmessers begrenzt werden kann.

Außerdem ermöglicht die Erfindung einen äußerst hygienischen Aufbau, da eine einfache Reinigbarkeit gegeben ist.

Von Vorteil ist auch, dass die Erfindung sowohl für einspurige Aufschneidevorrichtungen in Frage kommt als auch in Mehrspurslicern eingesetzt werden kann, letzteres auch dann, wenn eine spurindividuelle Produktpositionierung erforderlich ist. Dies lässt sich beispielsweise durch eine Aufteilung der Produktauflage in Einzel-Produktauflagen realisieren, worauf an anderer Stelle näher eingegangen wird.

Vorhandene Aufschneidevorrichtungen können problemlos mit einer erfindungsgemäß ausgebildeten Produktzufuhr nachgerüstet werden. Besonders einfach ist dies dann, wenn die Erfindung innerhalb eines Moduls oder innerhalb einer eigenen Baugruppe der Aufschneidevorrichtung realisiert werden kann. Dies ist insbesondere dann der Fall, wenn die Produktauflage die sogenannte Beladeschwinge eines Slicers bildet oder Bestandteil der Beladeschwinge ist, da sich die erfindungsgemäße Verstellfunktion bzw. Produktpositionierung besonders vorteilhaft in die Beladeschwinge eines Slicers integrieren lässt, ohne deren Funktionalität zu beeinträchtigen.

Bevorzugte Ausführungsformen der Erfindung sich auch in den abhängigen Ansprüchen, der nachfolgenden Beschreibung sowie der Zeichnung angegeben.

Die Produktauflage kann lediglich manuell verstellbar sein. Eine weitere Möglichkeit, eine Verstellbarkeit ohne genau hierfür vorgesehenen eigenen Stellantrieb zu realisieren, besteht darin, eine ohnehin erfolgende Bewegung eines anderen Bauteils, insbesondere eines Bauteils der Produktzufuhr, auszunutzen. Das andere Bauteil kann die Produktauflage in geeigneter Weise beaufschlagen, so dass die Bewegung des Bauteils auf mechanischem Wege in die gewünschte Verstellbewegung der Produktauflage umgesetzt wird. Beispielsweise kann die Produktauflage mittels einer verschwenkbaren Beladeschwinge, die an anderer Stelle näher beschrieben wird, verstellt werden, wenn diese ihre Arbeitsstellung erreicht.

Es kann alternativ aber auch vorgesehen sein, dass ein Antrieb zum Verstellen der Produktauflage vorgesehen ist. Bei dem Antrieb kann es sich beispielsweise um einen elektromotorischen Antrieb handeln. Der Motor kann insbesondere derart ausgebildet sein, dass die Position der Produktauflage beispielsweise über die Drehzahl oder die Winkelposition des Motors überwacht werden kann. Insbesondere kann als Antrieb ein Servomotor dienen. Ein derartiger Antriebsmotor erlaubt das Anfahren beliebiger Zwischenpositionen. Dies ist jedoch nicht zwingend. Es kann genügen, wenn die Produktauflage lediglich zwischen zwei Endstellungen verstellbar ist. Die Endstellungen können grundsätzlich auf beliebige Art und Weise vorgegeben sein. In einer möglichen Ausgestaltung können Sensoren zum Einsatz kommen, die eine jeweilige Querposition der Produktauflage detektieren und an eine Steuerung des betreffenden Antriebs ein jeweiliges Positionssignal ausgeben können.

Als Antrieb für die Produktauflage kann beispielsweise auch ein Spindelantrieb vorgesehen sein, der eine mittels eines Motors in Drehung versetzbare Gewindespindel umfasst, die mit einer oder mehreren an der Produktauflage angebrachten Spindelmuttern zusammenwirkt.

Des Weiteren kann für die Querverstellung der Produktauflage zumindest ein Pneumatikzylinder vorgesehen sein. Eine derartige Antriebslösung ist vergleichsweise einfach und kostengünstig, da keine zusätzliche Steuerung erforderlich ist und die beiden möglichen Endstellungen des Pneumatikzylinders ausreichen. Ein solcher Pneumatikzylinder kann beim Anschlagen des Produktes am Seitenanschlag für eine ausreichende Dämpfung sorgen.

Die Endlage der Produktauflage bei der Querverstellung kann in Abhängigkeit von den jeweiligen Gegebenheiten einstellbar sein. Alternativ oder zusätzlich kann die Länge des Verstellweges einstellbar sein. Auf diese Weise kann die Verstellfunktion der Produktauflage an die jeweilige Anwendung, insbesondere an die in Querrichtung gemessene Produktbreite oder den Produktdurchmesser, angepasst werden. Eine solche Einstellbarkeit ist jedoch nicht zwingend. In Abhängigkeit von den Produkten und der konkreten Ausgestaltung der Produktzufuhr kann während der Querverstellung ein gewisser Schlupf zwischen den Produkten und der Auflagefläche der Produktauflage in Kauf genommen werden.

Wenn die Endlage und/oder der Verstellweg der Produktauflage grundsätzlich veränderbar sind, kann hierfür eine flexible Regelung oder Einstellbarkeit vorgesehen werden. So kann beispielsweise bei jedem Beladevorgang, wenn ein oder mehrere Produkte auf die Produktauflage aufgebracht werden, mit zumindest einem Sensor beispielsweise in Form eines optischen Sensors, einer Kamera oder eines kompakten Scanners, die Lage der einzelnen Produkte in einer jeweiligen Spur erfasst werden. Die Querverstellung der Produkte kann dann bei entsprechender Ausgestaltung spurindividuell oder zentral entsprechend dem größten erforderlichen Verstellweg erfolgen, der durch dasjenige Produkt vorgegeben ist, welches nach dem Beladen den größten Abstand zu seinem Seitenanschlag aufweist. Unter einer zentralen Querverstellung der Produkte ist zu verstehen, dass die Produkte gemeinsam verstellt werden. Hierfür kann z.B. ein einziger, zentraler und somit gemeinsamer Stellantrieb vorgesehen sein.

Wenn die Produktauflage nicht manuell verstellt wird, sondern für die Produktauflage wenigstens ein Stellantrieb vorgesehen ist, dann kann dieser Stellantrieb an der Basis abgestützt sein.

Bei der Basis kann es sich beispielsweise um einen Maschinenrahmen oder ein Maschinengestell der Vorrichtung handeln, über den bzw. das die einzelnen Komponenten oder Baugruppen der Vorrichtung am Boden abgestützt sind. Alternativ kann die Basis eine der Produktauflage zugeordnete Baueinheit sein, die selbst an einem Maschinenrahmen oder einem Maschinengestell der Vorrichtung abgestützt ist. Vorzugsweise sind die Baueinheit und die Produktauflage gemeinsam relativ zu einem Maschinenrahmen oder Maschinengestell bewegbar. Insbesondere können diese Baueinheit und die Produktauflage gemeinsam zumindest einen Teil einer sogenannten Beladeschwinge der Vorrichtung bilden, welche insbesondere durch Verschwenken zwischen einer oberen oder geneigten Arbeitsposition und einer insbesondere horizontalen Beladeposition bewegbar ist. Auf die diesbezüglichen Ausführungen im Einleitungsteil wird verwiesen.

Wenn sich ein Stellantrieb zum Querverstellen der Produktauflage an einer solchen als Basis dienenden Baueinheit abstützt, dann kann der Stellantrieb folglich in eine relativ zu einem Maschinenrahmen oder Maschinengestell bewegbare Baugruppe integriert werden.

Unabhängig von der konkreten Ausgestaltung einer Basis, relativ zu welcher die Produktauflage in Querrichtung verstellbar ist, kann gemäß einer bevorzugten Ausgestaltung der Erfindung vorgesehen sein, dass der Seitenanschlag an der Basis angebracht ist.

Vorzugsweise umfasst die Produktzufuhr ferner einen zumindest während des Zuführens eines Produktes mit einem hinteren Bereich des Produktes zusammenwirkenden Produkthalter, wobei die Produktauflage relativ zu dem Produkthalter in Querrichtung verstellbar ist.

Wenn die Produktauflage beispielsweise als Beladeschwinge oder als Teil einer Beladeschwinge zwischen einer beispielsweise geneigten Arbeits- bzw. Schneideposition und einer etwa horizontalen Beladeposition verschwenkbar ist, dann ist es möglich, aber nicht zwingend erforderlich, dass der Produkthalter zusammen mit der Produktauflage verschwenkbar ist. Der Produkthalter kann sich stattdessen auch stets in einer oberen Position und während eines Beladevorgangs in einer Wartestellung befinden. Derartige Ausgestaltungen einer Produktzufuhr für einen Lebensmittelslicer sind grundsätzlich bekannt.

Wie eingangs bereits erwähnt, kann die Produktzufuhr mehrspurig ausgebildet sein, um dem Schneidbereich gleichzeitig mehrere in Querrichtung nebeneinander liegende Produkte zuzuführen. Dabei kann die Produktzufuhr für mehrere, und insbesondere für alle, Spuren einen Seitenanschlag aufweisen.

Die Produktauflage kann für mehrere, und insbesondere für alle, Spuren gemeinsam vorgesehen und zentral in Querrichtung verstellbar sein. Hierdurch lässt sich die Querverstellbarkeit der Produktauflage und somit der Produktzufuhr insgesamt besonders einfach realisieren. Die gemeinsame Produktauflage kann beispielsweise von einem einzigen in Querrichtung durchgehenden Auflageblech oder von einem einzigen Förderband gebildet werden, auf welchem alle Produkte aufliegen. Es braucht dann lediglich diese gemeinsame Produktauflage verstellt zu werden, um alle Produkte gleichzeitig in Querrichtung gegen den jeweiligen Seitenanschlag zu bewegen.

Grundsätzlich kann ein einziger Seitenanschlag auch für mehrere nebeneinander liegende Produkte genügen. Beim Verstellen der Produktauflage wird dann ein Produkt unmittelbar und die anderen Produkte dann jeweils mittelbar über ein oder mehrere andere Produkte gegen den Seitenanschlag bewegt.

Alternativ kann die Produktauflage mehrere jeweils zumindest einer Spur zugeordnete Einzel-Produktauflagen umfassen. Diese Einzel-Produktauflagen können zentral und/oder individuell in Querrichtung verstellbar sein. Bei einer individuellen Verstellbarkeit sind die einzelnen Produktauflagen folglich unabhängig voneinander in Querrichtung bewegbar, und zwar sowohl in zeitlicher Hinsicht als auch hinsichtlich einer jeweiligen Endlage sowie eines jeweiligen Verstellweges in Querrichtung. Die Aufteilung in Einzel-Produktauflagen ist jedoch nicht zwingend mit einer solchen individuellen Querverstellbarkeit verknüpft. Auch bei einer zentralen Querverstellbarkeit einer Mehrzahl von Einzel-Produktauflagen kann diese Aufteilung sinnvoll sein, um beispielsweise während des nach der Querpositionierung der Produkte erfolgenden Zuführ- und Schneidebetriebs die Produkte mittels der Einzel-Produktauflagen individuell in Transportrichtung zu fördern, wenn es sich beispielsweise bei den Einzel-Produktauflagen jeweils um ein aktiv angetriebenes oder auch frei umlaufendes Förder-, Transport- oder Auflageband handelt.

Wie ebenfalls im Einleitungsteil bereits angesprochen, können für die Produktauflage der Verstellweg und/oder die Endposition in Querrichtung fest vorgegeben oder vorgebbar sein. Alternativ können der Verstellweg und/oder die Endposition anwendungsabhängig veränderbar, steuerbar oder regelbar sein.

Bei dem erfindungsgemäßen Verfahren kann insbesondere vorgesehen sein, dass die Produktzufuhr ferner einen zumindest während des Zuführens eines Produktes mit einem hinteren Bereiches des Produktes zusammenwirkenden Produkthalter umfasst, wobei das Produkt in Querrichtung positioniert wird, bevor der Produkthalter mit dem hinteren Bereich des Produktes in Eingriff gebracht wird. Hierdurch braucht der Produkthalter selbst nicht in Querrichtung verstellbar zu sein. In einer alternativen Ausgestaltung kann gleichwohl der Produkthalter zusammen mit der Produktauflage in Querrichtung verstellbar sein.

Bevorzugt ist die Produktzufuhr mehrspurig ausgebildet, wobei bei dem Verfahren mehrere in Querrichtung nebeneinander liegende Produkte, insbesondere alle Produkte, gemeinsam mittels eines Verstellvorgangs der Produktauflage und mittels eines oder mehrerer Seitenanschläge in Querrichtung positioniert werden.

Bei einer bevorzugten Vorgehensweise im Rahmen des erfindungsgemäßen Verfahrens kann vorgesehen sein, dass die Produktauflage jeweils aus einer vorherigen Positionierstellung in eine Ausgangsstellung - bezogen auf die Querrichtung - zurückgestellt wird, bevor ein oder mehrere zuzuführende Produkte auf die Produktauflage aufgenommen werden. Hierdurch ist es insbesondere möglich, die für das Beladen oder das Verschwenken der Produktauflage erforderliche Zeitspanne zu nutzen, um die Produktauflage in ihre Ausgangsstellung zurückzubringen. Insbesondere kann das Zurückstellen der Produktauflage erfolgen, während die in diesem Fall als Beladeschwinge ausgebildete oder einen Teil einer Beladeschwinge bildende Produktauflage in eine insbesondere horizontale Beladeposition bewegt wird. Die Ausgangsstellung der Produktauflage kann so bereits erreicht sein, bevor die Produkte auf die Produktauflage gelangen. Hierdurch ist sichergestellt, dass die Produkte beim Beladen mit etwas Abstand zu den Seitenanschlägen auf die Produktauflage gelangen können.

Alternativ kann das Zurückführen der Produktauflage in die Ausgangsstellung entweder bereits bei noch in der Arbeits- bzw. Schneidstellung befindlicher Beladeschwinge oder erst nach Erreichen der horizontalen Beladestellung erfolgen.

Bei dem vorstehend anhand der Vorrichtung und des Verfahrens beschriebenen erfindungsgemäßen Konzept ist die Produktauflage verstellbar bzw. wird die Produktauflage verstellt, um die Auflagefläche und somit ein auf der Auflagefläche aufliegendes Produkt in Querrichtung zu bewegen. Gemäß einem separaten alternativen erfindungsgemäßen Konzept, für das unabhängig sowohl vorrichtungsmäßiger als auch verfahrensmäßiger Schutz beansprucht wird, wird das Produkt auf andere Weise in Querrichtung bewegt, also nicht direkt durch Bewegen der Auflagefläche. Bei diesem alternativen Konzept wird das Produkt relativ zur Auflagefläche in Querrichtung bewegt. Insbesondere ist vorgesehen, dass durch die Auflagefläche hindurch Einfluss auf das Produkt ausgeübt wird, um das Produkt in Querrichtung zu bewegen.

Beispielsweise ist unterhalb der die Auflagefläche definierenden Produktauflage eine Erreger- oder Mitnehmereinrichtung wirksam, die durch die Produktauflage hindurch Einfluss auf das Produkt ausübt, um das Produkt in Querrichtung relativ zu der Auflagefläche zu bewegen. Bevorzugt ist die Produktauflage hierbei flexibel ausgebildet. Insbesondere ist die Produktauflage durch das obere Trum eines Endlosförderbandes gebildet.

Die Erreger- oder Mitnehmereinrichtung kann zumindest einen zu einer oder mehreren Erregungs- oder Mitnahmebewegungen - bevorzugt motorisch - antreibbaren Erreger oder Mitnehmer aufweisen, der unterhalb der Produktauflage angeordnet ist. Der Erreger oder Mitnehmer kann z.B. als Unterstützung oder Abstützung für die Produktauflage dienen, wie sie mit Stützeinrichtungen z.B. in Form von Gleitblechen für Förderbänder grundsätzlich bekannt sind. Eine solche Unterstützung oder Abstützung kann in Querrichtung verstellbar sein und durch die Produktauflage hindurch das Produkt in Querrichtung bewegen, ohne dabei die Produktauflage zu verstellen.

Die Unterstützung oder Abstützung kann eine Gleitfläche für die Produktauflage aufweisen, die mit einer Kontur in Querrichtung versehen ist, z.B. in Form von in Transportrichtung verlaufenden, beispielsweise V- oder U-förmigen Nuten oder Rinnen oder in Form einer Krümmung oder Wölbung, die insbesondere an die Kontur der Produktunterseite angepasst ist. Eine Querbewegung einer solchen Unterstützung kann durch eine insbesondere flexible Produktauflage hindurch für eine Querbewegung des Produktes sorgen.

In einer weiteren möglichen Ausgestaltung kann die Erreger- oder Mitnehmereinrichtung eine Unterstützung oder Abstützung für die Produktauflage sowie eine Rüttel- oder Vibrationseinrichtung für die Unterstützung bzw. Abstützung umfassen. Hierdurch kann die Unterstützung oder Abstützung in Schwingung versetzt bzw. zum Vibrieren gebracht werden, um auf diese Weise durch die Produktauflage hindurch das auf der Auflagefläche aufliegende Produkt zu einer Querbewegung zu veranlassen.

Gemäß einer weiteren möglichen Ausgestaltung kann die Erreger- oder Mitnehmereinrichtung als um eine Drehachse drehbarer Exzenter unterhalb der Produktauflage ausgebildet sein. Die Drehachse verläuft z.B. parallel zur Transportrichtung. Der Exzenter kann so ausgebildet sein, dass er durch Verdrehen durch die - bevorzugt flexibel, z.B. als Förderband - ausgebildete Produktauflage hindurch das Produkt in Querrichtung bewegen kann. Hierbei kann die Produktauflage mit einer Kontur versehen sein, die wirksam wird, wenn der Exzenter durch Verdrehen die Produktauflage von unten beaufschlagt. Anstelle eines Exzenters kann auch eine Walkeinrichtung vorgesehen sein, um die beschriebene Wirkung hervorzurufen. Der Exzenter oder die Walkeinrichtung kann während des anschließenden Schneidbetriebs in der wirksamen Stellung verbleiben, um als Unterstützung oder Abstützung der Produktauflage zu dienen.

Des Weiteren kann die Erreger- oder Mitnehmereinrichtung über die Produktauflage auf das Produkt nach Art einer Hebe-Versatz-Einrichtung wirksam sein, die insbesondere zyklisch arbeitet und in jedem Zyklus zunächst mit einer Hebebewegung das Produkt mittels der Produktauflage anhebt und anschließend mit einer seitlichen Versatzbewegung für die Querbewegung des Produktes durch die Produktauflage hindurch sorgt.

Es ist grundsätzlich erfindungsgemäß auch möglich, die Produktauflage entweder nur vorübergehend zum Querbewegen des Produktes oder zum Querbewegen des Produktes und auch während des anschließenden Schneidbetriebs derart schrägzustellen, dass das Produkt z.B. durch Kippen, Rutschen oder Rollen in Anlage an den Seitenanschlag gelangt.

Die vorstehenden Ausgestaltungen sind jeweils auch bei einer mehrspurigen Produktzufuhr möglich und dann jeweils für jede der mehreren Spuren vorgesehen.

Die Erfindung wird im Folgenden beispielhaft unter Bezugnahme auf die Zeichnung beschrieben. Es zeigen:
- Fig. 1: schematisch in einer Seitenansicht einen Teil einer erfindungsgemäßen Aufschneidevorrichtung, und
- Fig. 2 - 4: jeweils in einer Schnittansicht entgegen der Transportrichtung T von Fig. 1 eine erfindungsgemäße Möglichkeit zur Querpositionierung mehrerer aufzuschneidender Produkte mittels einer in Querrichtung verstellbaren Produktauflage.

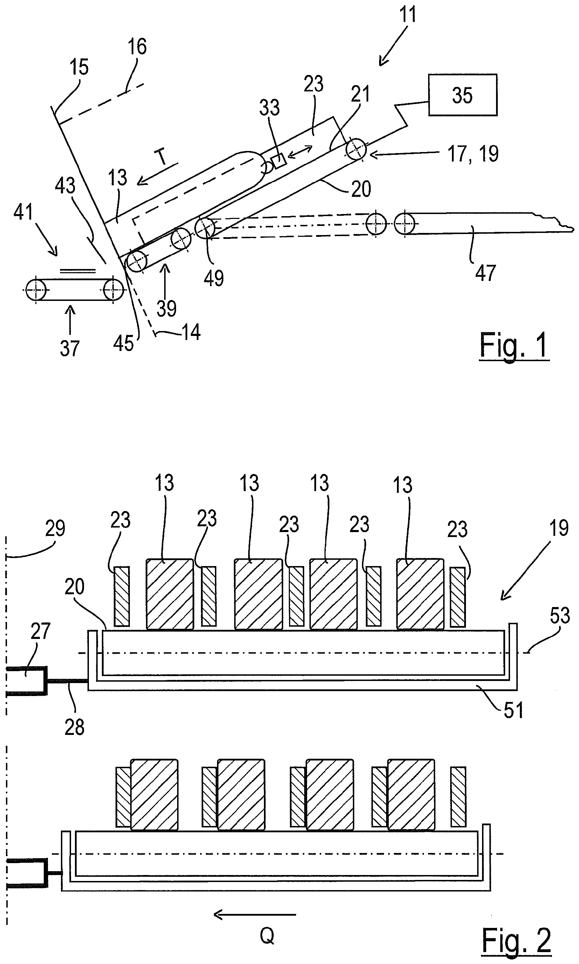

Fig. 1 zeigt den typischen Grundaufbau eines Lebensmittelslicers in einer schematischen Seitenansicht. Eine Produktzufuhr 11 für mehrere nebeneinander liegende Produkte 13, beispielsweise Wurst- oder Käseriegel, umfasst eine gemeinsame Produktauflage 19 für die Produkte 13, von der lediglich ein Förderband 20 dargestellt ist. Das obere Trum des Förderbandes 20 stellt eine ebene Auflagefläche 21 bereit, auf der die Produkte 13 aufliegen.

Zu der Produktzufuhr 11 gehören außerdem als Greifer ausgebildete Produkthalter 33. Jedem Produkt 13 und somit jeder Spur der mehrspurigen Produktzufuhr 11 ist ein derartiger Produkthalter 33 zugeordnet. Die Produkthalter 33 sind jeweils in und entgegen der Transportrichtung T verfahrbar, wie in Fig. 1 durch den Doppelpfeil angedeutet.

Ferner umfasst die Produktzufuhr 11 ein Unterstützungsband 39, das im Wesentlichen für den Produktvorschub sorgt und den Zwischenraum zwischen dem vorderen Ende des Förderbandes 20 und einer Schneidebene 14 überbrückt, die durch die Schneidkante eines rotierenden, z.B. als Sichelmesser ausgebildeten Schneidmessers 15 definiert ist. Dessen Drehachse 16 verläuft parallel zur Auflagefläche 21 der Produktauflage 19, wenn diese - wie in Fig. 1 mit durchgezogenen Linien gezeigt - sich in einer zur Horizontalen geneigten Arbeits- oder Schneidstellung befindet.

Das Schneidmesser 15 wirkt mit einer den messerseitigen Abschluss der Produktzufuhr 11 bildenden Schneidkante 45 zusammen, wenn das Schneidmesser 15 während des Schneidbetriebs von den in Transportrichtung T mittels der Produktzufuhr 11 in den Schneidbereich geförderten Produkten 13 Produktscheiben 43 abtrennt. Die Produktscheiben 43 fallen auf ein sogenanntes Portionierband 37, auf dem hierdurch Portionen 41 jeweils aus mehreren übereinander liegenden Scheiben 43 gebildet werden. Nicht dargestellt sind dem Portionierband 37 nachgeordnete Fördereinrichtungen, die dazu dienen, die vom Portionierband 37 weitertransportierten Portionen 41 zu übernehmen und einer weiteren Verarbeitung zuzuführen.

Dieser Arbeitsablauf eines Lebensmittelslicers ist dem Fachmann grundsätzlich bekannt, weshalb hierauf nicht näher eingegangen zu werden braucht.

Wie im Einleitungsteil bereits erwähnt, umfasst die Produktzufuhr 11 für jede Spur und somit für jedes aufzuschneidende Produkt 13 einen zumindest während des Schneidebetriebs feststehenden Seitenanschlag 23. In Transportrichtung T gesehen sind die Seitenanschläge 23 jeweils auf der rechten Seite des jeweiligen Produkts 13 angeordnet, wenn sich das Messer 15 - wiederum in Transportrichtung T gesehen - entgegen dem Uhrzeigersinn dreht und somit beim Eindringen in die Produkte 13 diesen jeweils einen in Richtung des jeweiligen Seitenanschlags 23 wirkenden Impuls verleiht.

Eine in der Praxis typische, für eine erfindungsgemäße Aufschneidevorrichtung aber nicht zwingende, gleichwohl allerdings bevorzugte Besonderheit der Produktzufuhr 11 besteht darin, dass die Produktauflage 19 ein Bestandteil einer sogenannten Beladeschwinge 17 ist, die um eine Schwenkachse 49 - die hier mit der Drehachse einer in Transportrichtung T gesehen vorderen Umlenkung für das Förderband 20 zusammenfällt - zwischen der geneigten Arbeitsstellung und einer in Fig. 1 gestrichelt gezeichneten horizontalen Beladestellung verschwenkbar ist.

In der Beladestellung können über ein vorgelagertes Transportband 47 neue Produkte 13 auf die Produktauflage 19 und somit auf die Beladeschwinge 17 geladen werden, die daraufhin zusammen mit den aufliegenden Produkten 13 wieder in die obere Arbeitsstellung geschwenkt wird.

Bevorzugt ist die Produktzufuhr 11 derart ausgebildet, dass an diesen Bewegungen der Beladeschwinge 17 die Seitenanschläge 23 teilnehmen, d.h. die Beladeschwinge 17 weist in diesem Fall zusätzlich zur Produktauflage 19 eine als Basis dienende Baueinheit auf, an der die Seitenanschläge 23 angebracht sind. Hierauf wird nachstehend näher eingegangen.

Die Produkthalter 33 dagegen nehmen an den Bewegungen der Beladeschwinge 17 vorzugsweise nicht teil, sondern sind über eine separate, hier nicht dargestellte und dem Fachmann ohnehin grundsätzlich bekannte Anordnung mit einem Maschinenrahmen der Aufschneidevorrichtung verbunden. Wenn die Beladeschwinge 17, die zuvor mit neuen Produkten 13 beladen worden ist, zurück in die geneigte Arbeitsstellung gelangt, befinden sich die Produkthalter 33 in einer zurückgefahrenen Ausgangsstellung, um dann zu Beginn des Zuführ- und Aufschneideprozesses mit den hinteren Bereichen der Produkte 13 in Eingriff gebracht zu werden.

Den Betrieb der Aufschneidevorrichtung steuert eine zentrale Steuereinrichtung 35, die mit den Antrieben der einzelnen Komponenten und gegebenenfalls vorhandenen Sensoren etc. kommuniziert.

Um die Produkte 13 quer zur Transportrichtung T in einer jeweils gewünschten Weise korrekt relativ zum Schneidmesser 15 zu positionieren, werden die Produkte 13 vor Beginn des Aufschneidebetriebs, und bevorzugt bereits vor dem Ineingriffbringen mit den Produkthaltern 33, gegen die bereits korrekt in Querrichtung positionierten Seitenanschläge 23 bewegt. Dies erfolgt erfindungsgemäß bei in Querrichtung relativ zum Schneidmesser 15 feststehenden Seitenanschlägen 23 durch Querverstellen der Produktauflage 19. Verschiedene erfindungsgemäße Möglichkeiten einer derartigen Querverstellung der Produktauflage 19 sind in den Fig. 2, 3 und 4 jeweils schematisch dargestellt.

In dem Beispiel der Fig. 2 zeigt der obere Teil die Produktauflage 19 in einer Ausgangsstellung relativ zu den fest mit einer hier nicht dargestellten Basis der Aufschneidevorrichtung verbundenen Seitenanschlägen 23. Die sich jeweils um eine Achse 53 drehenden Umlenkungen für das Förderband 20 der Produktauflage 19 sind an einem Träger 51 der Produktauflage 19 abgestützt. Die aufzuschneidenden Produkte 13 liegen auf dem Förderband 20 auf und befinden sich jeweils zwischen zwei Seitenanschlägen 23, dabei aber noch nicht in Anlage an dem in Fig. 2 jeweils linken Seitenanschlag 23. Da die Seitenanschläge 23 derart eingestellt sind, dass sie jeweils die korrekte Querposition relativ zum Schneidmesser 15 (vgl. Fig. 1) des jeweils zugeordneten Produktes 13 festlegen, müssen die Produkte 13 vor Beginn des Aufschneidebetriebs noch in Querrichtung verstellt werden, und zwar in Fig. 2 nach links, um in Anlage mit dem jeweiligen Seitenanschlag 23 zu gelangen.

Hierzu ist der Träger 31 mittels eines Stellantriebs 27 in der sich senkrecht zur Transportrichtung T (vgl. Fig. 1) verlaufenden Querrichtung Q relativ zu einem hier jeweils nur durch eine strichpunktierte Linie angedeuteten Maschinenrahmen 29 der Aufschneidevorrichtung verstellbar.

Der Stellantrieb 27 kann beispielsweise eine pneumatisch betriebene Kolben- /Zylinderanordnung umfassen. Während der Kolben am Maschinenrahmen 29 abgestützt ist, ist der Zylinder 28 mit dem Träger 51 der Produktauflage 19 verbunden. Die Ausgangsstellung der Produktauflage 19 mit ausgefahrenem Zylinder 28 des Stellantriebs 27 zeigt der obere Teil der Fig. 2, wohingegen der untere Teil der Fig. 2 die Positionierstellung der Produktauflage 19 mit eingefahrenem Zylinder 28 zeigt. Da die Seitenanschläge 23 bezüglich des Maschinenrahmens 29 feststehend angeordnet sind und die Produktauflage 19 mittels des Stellantriebs 27 relativ zum Maschinenrahmen 29 verstellt wird, werden die Produkte 13 durch die Verstellbewegung der Produktauflage 19 gegen die Seitenanschläge 23 bewegt und damit korrekt in Querrichtung Q und somit relativ zum Schneidmesser 15 positioniert.

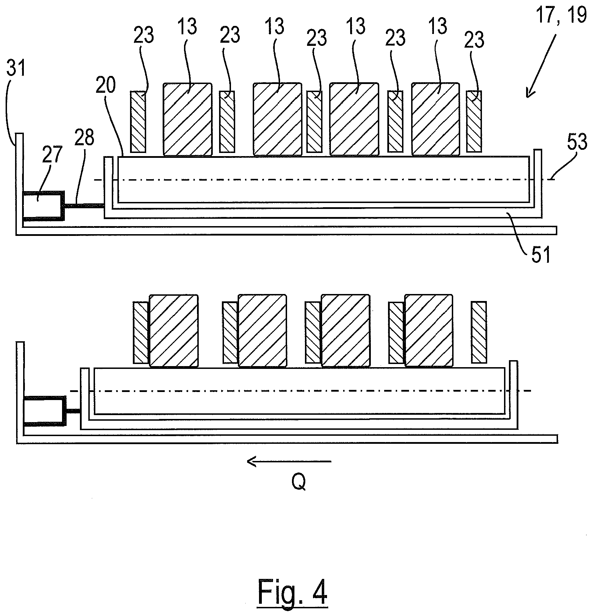

Da der Stellantrieb 27 hier als sich am Maschinenrahmen 29 abstützend dargestellt ist, ist streng genommen die Ausgestaltung der Produktauflage 19 als verschwenkbare Beladeschwinge oder zumindest als Bestandteil einer derartigen Beladeschwinge (vgl. Fig. 1) nicht oder nur dann möglich, wenn eine Abstützung des Stellantriebs 27 am Maschinenrahmen 29 derart gegeben ist, dass gleichzeitig die Schwenkbewegung der Beladeschwinge ermöglicht wird. Eine entsprechende konkrete Ausgestaltung ist in Fig. 2 nicht dargestellt. Eine alternative Ausgestaltung wird nachstehend in Verbindung mit Fig. 4 beschrieben.

Fig. 2 stellt folglich eine Lösung mit einer allen Produkten 13 und somit allen Spuren der Produktzufuhr 11 gemeinsamen Produktauflage 19 dar, die zentral über einen Stellantrieb 27 in Querrichtung Q verstellt werden kann. Eine individuelle, d.h. voneinander unabhängige Querverstellung der einzelnen Produkte 13 ist in einem solchen Fall nicht möglich. Der Verstellweg bzw. die Endstellung der Produktauflage 19 ist derart vorgegeben, dass auch dasjenige Produkt 13, das in der Ausgangsstellung am weitesten von seinem Seitenanschlag 23 entfernt ist, in der Positionierstellung sicher an seinem Seitenanschlag 23 anliegt. Die somit während des Verstellvorgangs früher an ihrem jeweiligen Seitenanschlag anliegenden Produkte 13 unterliegen folglich bis zum Ende des Verstellvorgangs einem Schlupf auf der Auflagefläche 21 der Produktauflage 19. Dies ist zumindest für die meisten in der Praxis zu verarbeitenden Produkte unproblematisch.

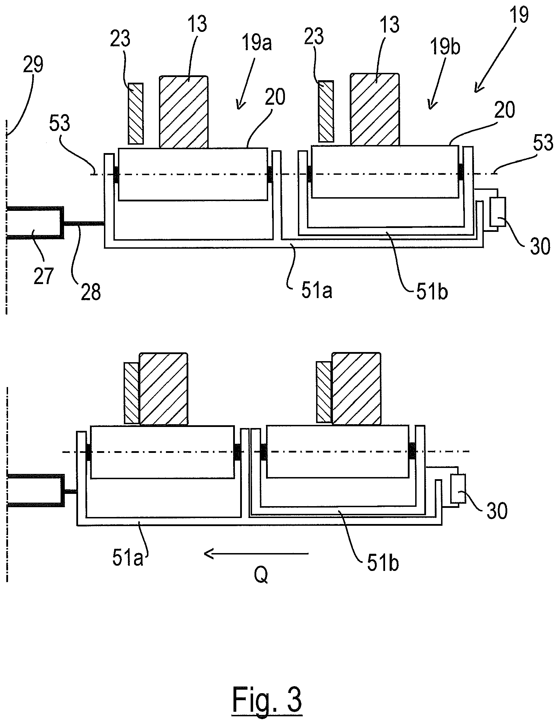

Eine Möglichkeit für eine spurindividuelle Verstellbarkeit der Produktauflage 19 in Querrichtung Q ist in Fig. 3 dargestellt. Die Produktauflage 19 ist für die hier zweispurig ausgebildete Produktzufuhr in zwei Einzel-Produktauflagen 19a, 19b aufgeteilt. Jede Spur besitzt ein eigenes Förderband 20. Ein gemeinsamer Träger 51a trägt direkt das in Fig. 3 linke Förderband 20 dieser Einzel-Produktauflage 19a. Des Weiteren trägt der gemeinsame Träger 51a mittelbar über einen weiteren Träger 51b das Förderband 20 der anderen Einzel-Produktauflage 19b. Während der gemeinsame Träger 51a über einen Stellantrieb 27 entsprechend dem Ausführungsbeispiel der Fig. 2 relativ zum Maschinenrahmen 29 in Querrichtung Q verstellt werden kann, ist der Träger 51b der Einzel-Produktauflage 19b mittels eines weiteren Stellantriebs 30, der grundsätzlich beliebig ausgestaltet sein kann und hier nur schematisch dargestellt ist, relativ zu dem gemeinsamen Träger 51a in Querrichtung Q verstellbar.

Auf diese Weise kann eine gemeinsam mit dem auf der linken Einzel-Produktauflage 19a aufliegenden Produkt 13 erfolgende Querbewegung des auf der rechten Einzel-Produktauflage 19b aufliegenden Produktes 13 erfolgen. Dieser Bewegung kann nun aber mittels des Stellantriebs 30 eine eigene Bewegung in Querrichtung Q überlagert werden. Im Rahmen eines von den jeweiligen konstruktiven Gegebenheiten abhängigen Stellweges zwischen den beiden Trägern 51a und 51b kann folglich ein unabhängiges Querverstellen der beiden Produkte 13 realisiert werden.

Insbesondere kann auf diese Weise eine Entkoppelung der beiden Produkte 13 insofern erreicht werden, als die Einzel-Produktauflage des zuerst in Anlage an seinen Seitenanschlag 23 gelangenden Produktes nicht weiterbewegt zu werden braucht. Schlupf zwischen dem betreffenden Produkt und seinem Förderband 20 braucht folglich nicht in Kauf genommen zu werden.

Die beiden Seitenanschläge 23 sind auch im Ausführungsbeispiel der Fig. 3 in Querrichtung Q bezüglich des Maschinenrahmens 29, an welchem sich der Stellantrieb 27 wie im Ausführungsbeispiel der Fig. 2 abstützt, feststehend angeordnet.

Dies gilt auch für das Ausführungsbeispiel der Fig. 4, bei dem wiederum eine gemeinsame Produktauflage 19 für alle Produkte 13 entsprechend dem Ausführungsbeispiel der Fig. 2 vorgesehen ist.

In dem hier dargestellten Ausführungsbeispiel ist nun aber eine als Basis zur Abstützung des Stellantriebs 27 dienenden Baueinheit 31 als ein Bestandteil einer verschwenkbaren Beladeschwinge 17 (vgl. auch Fig. 1) vorgesehen. Relativ zu dieser Baueinheit 31 ist die Produktauflage 19 mittels des Stellantriebs 27 in Querrichtung Q bewegbar. Durch diese Querverstellung der Produktauflage 19 werden die auf dem Förderband 20 der Produktauflage 19 aufliegenden Produkte 13 gegen die bezüglich der Baueinheit 31 in Querrichtung Q feststehenden Seitenanschläge 23 bewegt. Die Seitenanschläge 23 sind durch nicht dargestellte Halterungen mit der Baueinheit 31 verbunden und somit in die verschwenkbare Beladeschwinge 17 integriert.

Hierdurch wird eine Beladeschwinge 17 mit in Querrichtung Q relativ zu feststehenden Seitenanschlägen 23 verstellbarer Produktauflage geschaffen, so dass eine Querverstellung und folglich Produktpositionierung in jeder beliebigen Schwenkstellung der Beladeschwinge 17 und insbesondere auch während des Verschwenkens der Beladeschwinge 17 erfolgen kann.

Es versteht sich, dass bei allen vorstehend erläuterten Ausführungsbeispielen die während des Aufschneidebetriebs in Querrichtung Q feststehenden Seitenanschläge 23 gleichwohl in Querrichtung verstellt werden können, um die Sollposition eines jeweiligen Produktes 13 relativ zum Schneidmesser 15 ändern und so an unterschiedliche Gegebenheiten und Anwendungen anpassen zu können. Diese Einstellbarkeit der Querpositionen der Seitenanschläge 23 kann manuell oder jeweils durch einen geeigneten Stellantrieb erfolgen.

### Bezugszeichenliste

- 11: Produktzufuhr
- 13: Produkt
- 14: Schneidebene
- 15: Schneidmesser
- 16: Drehachse
- 17: Beladeschwinge
- 19: Produktauflage
- 19a: Einzel-Produktauflage
- 19b: Einzel-Produktauflage
- 20: Förderband
- 21: Auflagefläche
- 23: Seitenanschlag
- 25: Basis
- 27: Stellantrieb
- 28: Zylinder
- 29: Maschinenrahmen
- 30: Stellantrieb
- 31: Baueinheit
- 33: Produkthalter
- 35: Steuereinrichtung
- 37: Portionierband
- 39: Unterstützungsband
- 41: Portion
- 43: Scheibe
- 45: Schneidkante
- 47: Transportband
- 49: Schwenkachse
- 51: Träger
- 53: Drehachse

- T: Transportrichtung
- Q: Querrichtung

## Patentansprüche

1. Vorrichtung zum, insbesondere mehrspurigen, Aufschneiden von Lebensmittelprodukten, insbesondere Hochgeschwindigkeitsslicer, mit einer Produktzufuhr (11), die dazu ausgebildet ist, aufzuschneidende Produkte (13) in einer Transportrichtung (T) einem Schneidbereich zuzuführen, in welchem sich ein Schneidmesser (15) rotierend und/oder umlaufend bewegt, wobei die Produktzufuhr (11) wenigstens eine, insbesondere zumindest einen Teil einer Beladeschwinge (17) bildende, Produktauflage (19), durch die eine Auflagefläche (21) für die Produkte (13) definiert ist, und zumindest einen oberhalb der Auflagefläche (21) angeordneten, sich in Transportrichtung (T) erstreckenden Seitenanschlag (23) für wenigstens ein zuzuführendes Produkt (13) umfasst, und
wobei eine Basis (29, 31) vorgesehen ist,
**dadurch gekennzeichnet,**
**dass** die Produktauflage (19) in einer senkrecht zur Transportrichtung (T) verlaufenden Querrichtung (Q) bei in Querrichtung (Q) relativ zur Basis (29, 31) feststehend angeordnetem Seitenanschlag (23) relativ zu der Basis (29, 31) verstellbar ist.

2. Vorrichtung nach Anspruch 1,
wobei die Produktauflage (19) mittels eines sich an der Basis (25) abstützenden Stellantriebs (27) verstellbar ist.

3. Vorrichtung nach Anspruch 1 oder 2,
wobei die Basis ein Maschinenrahmen (29) oder Maschinengestell ist, oder wobei die Basis eine der Produktauflage (19) zugeordnete Baueinheit (31) ist, wobei vorzugsweise die Baueinheit (31) und die Produktauflage (19) gemeinsam relativ zu einem Maschinenrahmen (29) oder Maschinengestell bewegbar und insbesondere als schwenkbare Beladeschwinge (17) ausgebildet sind.

4. Vorrichtung nach einem der Ansprüche 1 bis 3,
wobei der Seitenanschlag (23) an der Basis (29, 31) angebracht ist.

5. Vorrichtung nach einem der vorhergehenden Ansprüche,
wobei die Produktzufuhr (11) ferner einen zumindest während des Zuführens eines Produktes (13) mit einem hinteren Bereich des Produktes (13) zusammenwirkenden Produkthalter (33) umfasst und die Produktauflage (19) relativ zu dem Produkthalter (33) in Querrichtung (Q) verstellbar ist.

6. Vorrichtung nach einem der vorhergehenden Ansprüche,
wobei die Produktzufuhr (11) mehrspurig ausgebildet ist, um dem Schneidbereich gleichzeitig mehrere in Querrichtung (Q) nebeneinander liegende Produkte (13) zuzuführen.

7. Vorrichtung nach Anspruch 6,
wobei die Produktzufuhr (11) für mehrere, und insbesondere für alle, Spuren jeweils einen Seitenanschlag (23) aufweist.

8. Vorrichtung nach Anspruch 7,
wobei die Produktauflage (19) für mehrere, und insbesondere für alle, Spuren gemeinsam vorgesehen ist, und wobei die Produktauflage (19) zentral in Querrichtung (Q) verstellbar ist.

9. Vorrichtung nach Anspruch 7,
wobei die Produktauflage (19) mehrere jeweils zumindest einer Spur zugeordnete Einzel-Produktauflagen (19a, 19b) umfasst, die zentral oder gemeinsam in Querrichtung verstellbar sind und/oder die individuell in Querrichtung (Q) verstellbar sind.

10. Vorrichtung nach einem der vorhergehenden Ansprüche,
wobei für die Produktauflage (19) der Verstellweg und/oder die Endposition in Querrichtung (Q) fest vorgegeben oder vorgebbar ist oder anwendungsabhängig veränderbar, steuerbar oder regelbar ist.

11. Verfahren zum, insbesondere mehrspurigen, Aufschneiden von Lebensmittelprodukten mittels einer Aufschneidevorrichtung, bevorzugt nach einem der vorhergehenden Ansprüche, insbesondere Hochgeschwindigkeitsslicer, mit einer Produktzufuhr (11), die aufzuschneidende Produkte (13) in einer Transportrichtung (T) einem Schneidbereich zuführt, in welchem sich ein Schneidmesser (15) rotierend und/oder umlaufend bewegt,
wobei die Produktzufuhr (11) wenigstens eine, insbesondere zumindest einen Teil einer Beladeschwinge (17) bildende, Produktauflage (19), durch die eine Auflagefläche (21) für die Produkte (13) definiert ist, und zumindest einen oberhalb der Auflagefläche (21) angeordneten, sich in Transportrichtung (T) erstreckenden Seitenanschlag (23) für wenigstens ein zuzuführendes Produkt (13) umfasst,
**dadurch gekennzeichnet,**
**dass** das Produkt (13) vor dem Aufschneiden in einer senkrecht zur Transportrichtung (T) verlaufenden Querrichtung (Q) relativ zum Schneidmesser (15) positioniert wird, indem das auf der Produktauflage (19) aufliegende Produkt (13) durch Verstellen der Produktauflage (19) in Querrichtung (Q) gegen den Seitenanschlag (23) bewegt wird.

12. Verfahren nach Anspruch 11,
wobei die Produktzufuhr (11) ferner einen zumindest während des Zuführens eines Produktes (13) mit einem hinteren Bereich des Produktes (13) zusammenwirkenden Produkthalter (33) umfasst, und wobei das Produkt (13) in Querrichtung (Q) positioniert wird, bevor der Produkthalter (33) mit dem hinteren Bereich des Produktes (13) in Eingriff gebracht wird.

13. Verfahren nach Anspruch 11 oder 12,
wobei die Produktzufuhr (11) mehrspurig ausgebildet ist, und wobei mehrere in Querrichtung (Q) nebeneinander liegende Produkte (13) gemeinsam mittels eines Verstellvorgangs der Produktauflage (19) und mittels eines oder mehrerer Seitenanschläge (23) in Querrichtung (Q) positioniert werden.

14. Verfahren nach einem der Ansprüche 11 bis 13,
wobei die Produktauflage (19) jeweils aus einer vorherigen Positionierstellung in eine Ausgangsstellung zurückgestellt wird, bevor ein oder mehrere zuzuführende Produkte (13) auf die Produktauflage (19) aufgenommen werden.

## Claims

1. An apparatus for the slicing, in particular multitrack slicing, of food products, in particular a high-speed slicer, comprising a product feed (11) which is configured to feed products (13) to be sliced in a transport direction (T) to a cutting region in which a cutting blade (15) moves in a rotating and/or revolving manner,
wherein the product feed (11) comprises at least one product support (19), which in particular forms at least a part of a loading rocker (17) and by which a support surface (21) for the products (13) is defined, and at least one side abutment (23) for at least one product (13) to be fed, said side abutment (23) being arranged above the support surface (21) and extending in the transport direction (T), and
wherein a base (29, 31) is provided,
**characterized in that**
the product support (19) is adjustable relative to the base (29, 31) in a transverse direction (Q) extending perpendicular to the transport direction (T) when the side abutment (23) is arranged in a fixed position relative to the base (29, 31) in the transverse direction (Q).

2. An apparatus according to claim 1,
wherein the product support (19) is adjustable by means of an actuating drive (27) supported at the base (25).

3. An apparatus according to claim 1 or 2,
wherein the base is a machine frame (29) or a machine rack, or wherein the base is an assembly (31) associated with the product support (19), wherein preferably the assembly (31) and the product support (19) are jointly movable relative to a machine frame (29) or a machine rack and are in particular configured as a pivotable loading rocker (17).

4. An apparatus according to any one of the claims 1 to 3,
wherein the side abutment (23) is attached to the base (29, 31).

5. An apparatus according to any one of the preceding claims,
wherein the product feed (11) further comprises a product holder (33) cooperating with a rear region of the product (13) at least during the feeding of a product (13) and the product support (19) is adjustable relative to the product holder (33) in the transverse direction (Q).

6. An apparatus according to any one of the preceding claims,
wherein the product feed (11) is formed with multiple tracks to simultaneously feed a plurality of products (13) disposed next to one another in the transverse direction (Q) to the cutting region.

7. An apparatus according to claim 6,
wherein the product feed (11) has a respective side abutment (23) for a plurality of tracks, and in particular for all the tracks.

8. An apparatus according to claim 7,
wherein the product support (19) is jointly provided for a plurality of tracks, and in particular for all the tracks, and wherein the product support (19) is centrally adjustable in the transverse direction (Q).

9. An apparatus according to claim 7,
wherein the product support (19) comprises a plurality of individual product supports (19a, 19b) which are each associated with at least one track and which are centrally or jointly adjustable in the transverse direction and/or individually adjustable in the transverse direction (Q).

10. An apparatus according to any one of the preceding claims,
wherein the adjustment path and/or the end position is or can be fixedly predefined in the transverse direction (Q) for the product support (19) or can be changed, controlled or regulated depending on the application.

11. A method for the slicing, in particular multitrack slicing, of food products, by means of a slicing apparatus, preferably according to any one of the preceding claims, in particular a high-speed slicer, comprising a product feed (11) which feeds products (13) to be sliced in a transport direction (T) to a cutting region in which a cutting blade (15) moves in a rotating and/or revolving manner,
wherein the product feed (11) comprises at least one product support (19), which in particular forms at least a part of a loading rocker (17) and by which a support surface (21) for the products (13) is defined, and at least one side abutment (23) for at least one product (13) to be fed, said side abutment (23) being arranged above the support surface (21) and extending in the transport direction (T),
**characterized in that**
the product (13) is positioned relative to the cutting blade (15) in a transverse direction (Q), which extends perpendicular to the transport direction (T), before the slicing by moving the product (13) disposed on the product support (19) against the side abutment (23) by adjusting the product support (19) in the transverse direction (Q).

12. A method according to claim 11,
wherein the product feed (11) further comprises a product holder (33) cooperating with a rear region of the product (13) at least during the feeding of a product (13), and wherein the product (13) is positioned in the transverse direction (Q) before the product holder (33) is brought into engagement with the rear region of the product (13).

13. A method according to claim 11 or 12,
wherein the product feed (11) is formed with multiple tracks, and wherein a plurality of products (13) disposed next to one another in the transverse direction (Q) are jointly positioned in the transverse direction (Q) by means of an adjustment process of the product support (19) and by means of one or more side abutments (23).

14. A method according to any one of the claims 11 to 13,
wherein the product support (19) is in each case returned from a previous positioning position to a starting position before one or more products (13) to be fed are picked up on the product support (19).

## Revendications

1. Dispositif de tranchage, en particulier sur plusieurs pistes, de produits alimentaires, en particulier trancheuse à grande vitesse, comprenant une alimentation en produits (11) qui est conçue pour amener des produits (13) à trancher dans une direction de transport (T) jusqu'à une zone de coupe dans laquelle une lame de coupe (15) se déplace en rotation et/ou en révolution, l'alimentation en produits (11) comprenant au moins un support de produits (19) qui forme au moins une partie d'une bielle de chargement (17) et qui définit une surface de support (21) pour les produits (13), et au moins une butée latérale (23) pour au moins un produit (13) à amener, qui est disposée au-dessus de la surface de support (21) et qui s'étend dans la direction de transport (T), et
dans lequel est prévue une base (29, 31),
**caractérisé en ce que**
le support de produits (19) est réglable par rapport à la base (29, 31) dans une direction transversale (Q) s'étendant perpendiculairement à la direction de transport (T), la butée latérale (23) étant disposée de manière stationnaire par rapport à la base (29, 31) dans la direction transversale (Q).

2. Dispositif selon la revendication 1,
dans lequel le support de produits (19) est réglable au moyen d'un actionneur (27) s'appuyant sur la base (25).

3. Dispositif selon la revendication 1 ou 2,
dans lequel la base est un châssis de machine (29) ou un bâti de machine, ou la base est une unité de construction (31) associée au support de produits (19), de préférence, l'unité de construction (31) et le support de produits (19) étant mobiles en commun par rapport à un châssis de machine (29) ou à un bâti de machine et étant en particulier réalisés sous la forme d'une bielle de chargement (17) mobile en pivotement.

4. Dispositif selon l'une des revendications 1 à 3,
dans lequel la butée latérale (23) est montée sur la base (29, 31).

5. Dispositif selon l'une des revendications précédentes,
dans lequel l'alimentation en produits (11) comprend en outre un élément de retenue de produit (33) coopérant avec une partie arrière d'un produit (13) au moins pendant l'amenée du produit (13), et le support de produits (19) est réglable par rapport à l'élément de retenue de produit (33) dans la direction transversale (Q).

6. Dispositif selon l'une des revendications précédentes,
dans lequel l'alimentation en produits (11) est à plusieurs pistes, afin d'amener simultanément plusieurs produits (13), situés les uns à côté des autres dans la direction transversale (Q), jusqu'à la zone de coupe.

7. Dispositif selon la revendication 6,
dans lequel l'alimentation en produits (11) présente une butée latérale (23) pour chacune de plusieurs, en particulier de toutes les pistes.

8. Dispositif selon la revendication 7,
dans lequel le support de produits (19) est prévu en commun pour plusieurs, en particulier pour toutes les pistes, et le support de produits (19) est réglable de manière centralisée dans la direction transversale (Q).

9. Dispositif selon la revendication 7,
dans lequel le support de produits (19) comprend plusieurs supports de produits individuels (19a, 19b) associés chacun à au moins une piste, qui sont réglables de manière centralisée ou en commun dans la direction transversale et/ou qui sont réglables individuellement dans la direction transversale (Q).

10. Dispositif selon l'une des revendications précédentes,
dans lequel, pour le support de produits (19), la course de réglage et/ou la position de fin de course dans la direction transversale (Q) est prédéfinie ou prédéfinissable ou peut être modifiée, commandée ou réglée en fonction de l'application.

11. Procédé pour trancher, en particulier sur plusieurs pistes, des produits alimentaires au moyen d'un dispositif de tranchage, de préférence selon l'une des revendications précédentes, en particulier au moyen d'une trancheuse à grande vitesse, comprenant une alimentation en produits (11) qui amène des produits (13) à trancher dans une direction de transport (T) jusqu'à une zone de coupe dans laquelle une lame de coupe (15) se déplace en rotation et/ou en révolution,
dans lequel l'alimentation en produits (11) comprend au moins un support de produits (19) qui forme en particulier au moins une partie d'une bielle de chargement (17) et qui définit une surface de support (21) pour les produits (13), et au moins une butée latérale (23) pour au moins un produit (13) à amener, qui est disposée au-dessus de la surface de support (21) et qui s'étend dans la direction de transport (T), et
**caractérisé en ce que**
avant le tranchage, le produit (13) est positionné par rapport à la lame de coupe (15) dans une direction transversale (Q) s'étendant perpendiculairement à la direction de transport (T), en déplaçant le produit (13), reposant sur le support de produits (19), contre la butée latérale (23) par déplacement du support de produits (19) dans la direction transversale (Q).

12. Procédé selon la revendication 11,
dans lequel l'alimentation en produits (11) comprend en outre un élément de retenue de produit (33) coopérant avec une partie arrière d'un produit (13) au moins pendant l'amenée du produit (13), et le produit (13) est positionné dans la direction transversale (Q) avant que l'élément de retenue de produit (33) ne soit amené en engagement avec la partie arrière du produit (13).

13. Procédé selon la revendication 11 ou 12,
dans lequel l'alimentation en produits (11) est à plusieurs pistes, et plusieurs produits (13), situés les uns à côté des autres dans la direction transversale (Q), sont positionnés en commun dans la direction transversale (Q) au moyen d'une opération de réglage du support de produits (19) et au moyen d'une ou plusieurs butées latérales (23).

14. Procédé selon l'une des revendications 11 à 13,
dans lequel le support de produits (19) est ramené d'une position de positionnement précédente à une position de départ, avant qu'un ou plusieurs produits (13) à amener soient reçus sur le support de produits (19).
